## Europäisches Patentamt

## European Patent Office

## Office européen des brevets

(19)

(11) Veröffentlichungsnummer: **0 120 812**
**B1**

(12) **EUROPÄISCHE PATENTSCHRIFT**

(45) Veröffentlichungstag der Patentschrift:
08.02.89

(51) Int. Cl.⁴: **C 04 B 40/00,** B 28 C 5/38,
E 04 G 21/04

(21) Anmeldenummer: 84810131.7

(22) Anmeldetag: 20.03.84

(54) Verfahren und Vorrichtung zur Herstellung und unmittelbaren Anwendung von gebrauchsfertigen Baustoffzubereitungen.

(30) Priorität: 26.03.83 CH 1635/83

(43) Veröffentlichungstag der Anmeldung:
03.10.84 Patentblatt 84/40

(45) Bekanntmachung des Hinweises auf die Patenterteilung:
08.02.89 Patentblatt 89/6

(84) Benannte Vertragsstaaten:
AT BE CH DE FR GB IT LI LU NL SE

(56) Entgegenhaltungen:
EP-A- 0 035 281
AT-B- 327 511
BE-A- 720 757
DE-A- 2 059 442
DE-A- 2 228 198
DE-A- 2 947 913
DE-B- 2 130 257
DE-B- 2 453 527
US-A- 1 592 672

SOVIET INVENTIONS ILLUSTRATED, Section Chemical,
Woche E12, 5. Mai 1982, Abstract Nr. E12, LO2, Derwent
Publication Ltd., London, GB; & SU - A - 833 705 (UKR
HYDRO-TECH AMEL) 10.06.1981
PATENT ABSTRACTS OF JAPAN, Band 7, Nr. 11
(C-145)[1156], 18. Januar 1983; & JP - A - 57 167 769
(SUMITOMO KAGAKU KOGYO K.K.) 15.10.1982

(73) Patentinhaber: Schönhausen, Horst, Dr., Im
Staubenweidli 9, CH-8820 Wädenswil (CH)

(72) Erfinder: Schönhausen, Horst, Dr., Im Staubenweidli 9,
CH-8820 Wädenswil (CH)

(74) Vertreter: Gassmann, Hans Ulrich, Dr., route J,
Chaley 56, CH-1700 Fribourg (CH)

## Beschreibung

Die Erfindung betrifft ein neues Verfahren zur Herstellung und unmittelbaren Verwendung von gebrauchsfertigen Baustoffzubereitungen, sowie eine Vorrichtung zur Ausübung des Verfahrens. Gebrauchfertige Baustoffzubereitungen im Sinne der Erfindung sind nasse Mörtel, Putz-, Füll- und Ausgleichsmassen sowie Fliesenkleber zur Anwendung auf Böden, Wänden und Decken.

Trockene, pulverförmige oder gekörnte Mischungen, die durch einfaches Anrühren mit Wasser zu gebrauchsfertigen Baustoffzubereitungen verarbeitet werden können, sind bekannt und unter verschiedenen Bezeichnungen im Handel erhältlich. Solche Gemische bestehen grundsätzlich aus drei Hauptbestandteilen:

- einem oder mehreren Bindern, d.h. Substanzen, die mit Wasser unter chemischer und/oder physikalischer Umwandlung reagieren und dabei zu einer zusammenhängenden Masse erhärten;
- Füllstoffen, die mit Wasser nicht reagieren, jedoch vom Binder beim Erhärten mit eingeschlossen werden und damit zusätzliches Volumen und gegebenenfalls auch verbesserte Festigkeitseigenschaffen oder erhöhte Wärmedämmung bewirken.
- Zusatzstoffen, welche in erster Linie die physikalischen Eigenschaften der nassen Baustoffmasse günstig beeinflussen, wie z.B. die Konsistenz und Fliessbarkeit, die Wasserretention, die Abbindegeschwindigkeit und unter Umständen auch die Luftporenbildung.

Als Binder werden altbekannte Materialien, wie z.B. Zement, gebrannter Kalk, Gips oder Magnesit oder Gemische dieser Substanzen verwendet. Gebräuchliche Füllstoffe sind z.B. Sand, Steinmehl, gebrochener Marmor oder Dolomit, vermahlene Schlacke, Flugasche, Ton, Kaolin und ähnliche Stoffe; als Wärmedämmittel können ausserdem poröse Stoffe wie Blähton oder Polystyrolschaum zugesetzt werden.

Zur Klasse der Zusatzstoffe, welche der Zubereitung im allgemeinen in Mengen von weniger als 3%, vorzugsweise weniger als 1% zugesetzt werden, gehören in erster Linie natürliche oder synthetische hydrophile Polymere, wie z.B. tierische oder pflanzliche Leime, Alginate, lösliche Stärkeäther, Cellulosederivate, wie z.B. Celluloseäther oder Carboxymethylcellulose, ferner Polyvinylalkohol, Derivate der Polyacrylsäure, wie z.B. Polyacrylamid, ausserdem Tenside wie Seifen, Harzseifen, Fettsäureester und -sulfonate, Alkylarylsulfonate, Ligninsulfonat und Äthylenoxidaddukte; speziell als Abbindeverzögerer werden auch gewisse Säuren wie z.B. Weinsäure, Maleinsäure oder Zitronensäure eingesetzt.

Ein Teil dieser Zusatzstoffe ist hygroskopisch. Fertige Gemische, die alle drei Hauptbestandteile, Binder, Füllstoffe und Zusatzstoffe enthalten, müssen deshalb äusserst trocken hergestellt und vor Feuchtigkeit geschützt aufbewahrt werden, da sonst die Gefahr eines vorzeitigen Abbindens besteht. So ist es z.B. üblich, für die Herstellung des trockenen Gemisches feuergetrockneten Sand zu verwenden. In der Regel ist ein Feuchtigkeitsgehalt von mehr als 0.1 Gewichtsprozent im fertigen Gemisch bereits unzulässig. An die Verpackung müssen deshalb hohe Anforderungen gestellt werden. Angebrochene Verpackungen auf ungeschützten Baustellen bilden dabei natürlich ein besonderes Problem.

Weitere Schwierigkeiten ergeben sich vor allem dann, wenn innert kurzer Frist grosse Mengen des Baustoffgemisches verarbeitet werden müssen. Auf vielen Baustellen ist es üblich, zur Bereitstellung und Verarbeitung grösserer Materialmengen Maschinen zu verwenden, welche sowohl die Vermengung des trockenen Gemisches mit der nötigen Menge Wasser als auch die örtliche Applikation der fertigen Zubereitungen besorgen. Bekannt ist z.B. die sogenannte Spritzputzmaschine. Diese besteht im wesentlichen aus einem Einfülltrichter für das trockene Gemenge, einer Mischkammer mit Zugabevorrichtung für das Wasser, daran anschliessend einem Schneckenförderer und schliesslich einer mittels Schlauch angeschlossenen Applikationsdüse. Das Austragen der fertigen Masse wird häufig noch durch Pressluft unterstützt. Mit Hilfe einer solchen Maschine ist es möglich, ausgehend von der trockenen Mischung und Wasser, innert kurzer Zeit eine grosse Menge der gebrauchsfertigen Baustoffzubereitung herzustellen und praktisch gleichzeitig an Ort und Stelle aufzubringen. Die Maschine kann dabei mit einzelnen Portionen der Ausgangsstoffe beschickt werden; vorzugsweise arbeitet man jedoch im kontinuierlichen Betrieb, wobei die Maschine mit den erforderlichen Dosiervorrichtungen für trockenes Gemisch und Wasser ausgerüstet sein muss. Die örtliche Anwendung der Baustoffmasse kann in verschiedener Weise erfolgen, z.B. durch flächenhaftes Auftragen wie etwa für Putz- oder Estrichmörtel, oder auch durch einen Einspritzvorgang in Fugen und Hohlräume.

Bekannt ist ferner das sogenannte Trockenspritzverfahren, wie es z.B. in der Europäischen Patentanmeldung 0 035 281 beschrieben worden ist. Bei diesem Verfahren wird das in einem Mischer vorbereitete Baustoffgemisch ohne Wasserzusatz in trockener Form bis zur Applikationsdüse gefördert und erst dort mit der nötigen Menge Wasser vermischt.

Ein wichtiges Problem bei den bekannten Maschinen für die Herstellung und unmittelbare Applikation von gebrauchsfertigen Baustoffgemischen besteht darin, dass mit Rücksicht auf das Fassungsvermögen der Maschine für den gesamten Mischvorgang nur eine sehr kurze Zeit, normalerweise etwa 6 bis 20 Sekunden, zur Verfügung steht. Dies gilt sowohl für den portionenweisen als auch für den kontinuierlichen Betrieb. An die Wirksamkeit der Mischanlage werden damit sehr hohe Anforderungen gestellt. Einerseits bedingt die Trockenheit der zugeführten Grundstoffe einen relativ hohen Energieverbrauch und damit auch einen entsprechenden Verschleiss des Mischers; andererseits wirkt sich die geringe Dosierung der Zusatzstoffe ungünstig aus, da sie eine

2

hohe Mischhomogenität voraussetzt. Eine weitere Erschwerung entsteht durch die geringe Lösungsgeschwindigkeit gewisser hochmolekularer Zusatzstoffe dies besonders dann, wenn sie in gekörnter Form vorliegen. Vielfach reicht deshalb die zur Verfügung stehende Zeit zur Auflösung dieser Zusätze nicht aus; man ist deshalb gezwungen, ihre Lösungsgeschwindigkeit durch Feinvermahlung oder besondere Oberflächenbehandlung zu verbessern, oder eine nur teilweise Auflösung durch erhöhte Dosierung auszugleichen. Diese letztere Massnahme ist natürlich unwirtschaftlich und wird deshalb nach Möglichkeit vermieden. Beim erwähnten Trockenspritzverfahren stellt sich das Problem noch in erhöhtem Masse, da hier die für den Mischvorgang mit Wasser zur Verfügung stehende Zeit extrem kurz ist.

Ein weiterer Nachteil des bisher bekannten Verfahren und der dafür verwendeten Maschinen besteht im hohen Verschleiss des zwischen Mischer und Applikationsdüse eingeschalteten Transportschlauchs. Gewisse Bestandteile der Baustoffzubereitungen, insbesondere relativ grob vermahlene Füllstoffe, beanspruchen die Maschinenelemente des Mischers und die Wandungen des Transportschlauchs in hohem Masse durch Abrasion. Während beim Mischer diesem Verschleiss durch Verwendung besonders harter Konstruktionsmaterialien wenigstens teilweise abgeholfen werden kann, lässt sich beim Transportschlauch, wegen der notwendigen Flexibilität, nur eine sehr beschränkte Auswahl von Materialien einsetzen.

Das Verfahren gemäss der vorliegenden Erfindung löst einerseits die Aufgabe, die angedeuteten Schwierigkeiten beim Lösen und homogenen Verteilen der Zusatzstoffe zu überwinden und anderseits, das Problem des übermässigen Verschleisses am Transportschlauch zu überwinden.

Die gleichzeitige Lösung dieser beiden Aufgaben gelingt dadurch, dass man einerseits eine trockene Vormischung verwendet, welche nur Binder und Füllstoffe enthält und diese in einer speziellen Mischmaschine mit einer wässerigen Lösung der Zusatzstoffe vermengt und anderseits bei dieser ersten Nassvermischung mindestens einen Teil der wässerigen Lösung von Zusatzstoffen zurückbehält um damit in einer speziellen konzentrischen Extrusionsdüse das aus dem Mischer kommende Nassgemisch mit einem schmierenden zylindrischen Mantel zu umgeben.

Das trockene Vorgemisch von Binder und Füllstoffen kann auf der Baustelle aus den Grundbestandteilen bereitgestellt werden, z.B. in einer speziell dafür vorgesehenen Mischmaschine. Da für diesen Vorgang beliebig viel Zeit zur Verfügung steht, braucht die Leistung der Maschine nicht besonders hoch zu sein. Diese Arbeitsweise erlaubt es, Binder und Füllstoffe getrennt anzuliefern und aufzubewahren, wodurch die erwähnten Probleme, die durch Feuchtigkeit verursacht werden, zum grössten Teil entfallen.

Das trockene Gemisch von Binder und Füllstoffen wird sodann in einem speziellen Nassmischer mit einer wässerigen Lösung der Zusatzstoffe vermengt. Der Nassmischer muss zu diesem Zweck einerseits mit einer Einfüllvorrichtung für das trockene Gemisch und anderseits mit einer Zugabevorrichtung für die wässerige Lösung ausgerüstet sein. Bei Chargenbetrieb können sowohl die trockene als auch die flüssige Komponente nach Gewicht oder Volumen portionenweise zudosiert werden. Bei kontinuierlichem Betrieb, wie er im allgemeinen vorgezogen wird, müssen sowohl für das trockene Gemisch als auch für die wässerige Lösung kontinuierlich wirkende Dosiervorrichtungen vorgesehen werden.

Damit nun der an den Mischer anschliessende Transportschlauch nicht durch das abrasive Baustoffgemisch beschädigt wird, umgibt man erfindungsgemäss das feuchte Gemisch vor dem Transport mit einem schmierenden Flüssigkeitsmantel. Dies geschieht in einer konzentrischen Extrusionsdüse, die unmittelbar an den Nassmischer angeschlossen ist. Diese Extrusionsdüse besitzt einen zentralen Zufuhrstutzen, der von einem ringförmigen Raum umgeben ist und schliesslich, koaxial zum Eintrittsstutzen, einen Austrittsstutzen, an welchen der Transportschlauch angeschlossen ist. Durch den zentralen Zufuhrstutzen wird das aus dem Nassmischer austretende Gemenge eingeführt; im ringförmigen Raum wird es von einer seitlich eingeführten schmierenden Flüssigkeit umgeben. Es verlässt die Düse schliesslich als zweischichtiger Strang mit dem Binder, Füllstoffe und einen Teil der Zusatzstoffe enthaltenden Gemisch im Kern und einem schmierenden zylindrischen Mantel, enthaltend die restlichen Zusatzstoffe als Aussenschicht.

Erfindungsgemäss wird als schmierende Flüssigkeit ein Teil der für das Gesamtgemisch notwendigen Zusatzstoffe verwendet. Es wird also bei der ersten Nassmischung nur ein Teil der wässerigen Lösung von Zusatzstoffen zugemischt; der Rest wird für die seitliche Einspeisung in die konzentrische Extrusionsdüse zurückbehalten. Ein grosser Teil der als Zusatzstoffe allgemein verwendeten Chemikalien, wie z.B. die Leime und insbesondere hochmolekulare Vinyl- und Acrylpolymere sowie Cellulosederivate besitzen in wässeriger Lösung schmierende Eigenschaften und eignen sich deshalb als Schutzmantel für die Förderung des Gemisches im Transportschlauch. Durch Reibung wird dieser schmierende Schutzmantel während des Transports allmählich abgebaut und vermischt sich mit den Bestandteilen des Kerns. Durch geeignete Wahl von Viskosität und Dicke des Flüssigkeitsmantels kann erreicht werden, dass die Aussenschicht beim Erreichen der Applikationsdüse praktisch abgebaut, und der gesamte Schlauchquerschnitt homogen vermischt ist. Je nach Länge des Schlauchs, Fliessgeschwindigkeit und Viskosität des schmierenden Mantels wird man im allgemeinen mit einer Schichtdicke von etwa 0.5 bis 2 Millimetern die angestrebte Schutzwirkung optimal erreichen.

Entsprechend der vorgesehenen Dicke und Viskosität der Flüssigkeitsschicht muss der Anteil an Zusatzstoffen und Wasser für die erste Mischstufe und den in der Ringdüse zudosierten Flüssigkeitsmantel verteilt werden. Die Zusammensetzung der im Nassmischer beziehungsweise in der Extrusionsdüse zugesetzten Flüssigkeitsanteils kann dabei gleich oder verschieden sein. Unter Umständen ist es vorteilhaft, die Anteile der Zusatzstoffe mit schmierenden Eigenschaften in erster Linie für die Bildung des Flüssigkeitsmantels zu verwenden.

Das Verfahren gemäss der vorliegenden Erfindung besteht danach im wesentlichen aus vier unterscheidbaren Schritten:

a) Vermischen der getrennt auf die Baustelle angelieferten trockenen Bestandteile Binder und Füllstoff in einer separaten Maschine. Einspeisung dieses trockenen Gemenges in den portionenweise oder kontinuierlich arbeitenden Nassmischer für die Bereitstellung und unmittelbare Applikation der fertigen Baustoffzubereitung;

b) Vermengen dieses trockenen Gemisches im Nassmischer mit Wasser und einem Teil einer wässerigen Lösung der Zusatzstoffe;

c) unmittelbar anschliessend an die Vermischung Austrag in den zentralen Teil einer ringförmigen konzentrischen Extrusionsdüse und Einspeisung der restlichen wässerigen Lösung der Zusatzstoffe in die seitliche Zuleitung der Extrusionsdüse;

d) Transport der aus einem zentralen Kern und einem umhüllenden flüssigen Mantel bestehenden Baustoffzubereitung durch einen flexiblen Schlauch bis zur Applikationsdüse, und Applikation der Zubereitung an Ort und Stelle.

Als Applikationsdüse dienen bekannte Vorrichtungen, bei denen der Austrag der Baustoffzubereitung vorzugsweise durch Pressluft unterstützt wird. In einer besonderen Ausführungsform der Erfindung wird der Baustoffzubereitung in der Applikationsdüse eine hydrophobierende Silikonverbindung zugemischt, bevorzugt in Form eines Aerosols, welches dem für den Auftrag verwendeten Pressluftstrom beigemischt wird. Für die Erzeugung des Aerosols geeignet sind z.B. in organischen Lösungsmitteln oder in Gemischen von Wasser und organischen Lösungsmitteln lösliche oligomere Organosiloxane, wie sie unter verschiedenen Bezeichnungen im Handel erhältlich sind. Die Siloxanlösung wird dabei durch eine gebräuchliche Zerstäuberdüse in den Pressluftstrom eingeführt. Die verwendete Silikonlösung soll, je nach Anwendungszweck, so bemessen werden, dass im Flächenauftrag etwa 0.01 bis 0.1 g Silikon auf einen Quadratmeter aufgetragener Baustoffzubereitung entfallen.

Das erfindungsgemässe Verfahren und die zu seiner Ausführung dienende Vorrichtung sind in den Figuren 1 bis 3 durch schematische Darstellungen erläutert.

Fig. 1 zeigt ein Fliessdiagramm des erfindungsgemässen Verfahrens für die Herstellung und Applikation von gebrauchsfertigen Baustoffzubereitungen.

Fig. 2 zeigt eine schematische Darstellung der für das Verfahren verwendeten Mischapparatur im Längsschnitt.

Fig. 3 zeigt eine schematische Darstellung der konzentrischen Extrusionsdüse wie sie zur Erzeugung des schmierenden Flüssigkeitsmantels verwendet wird.

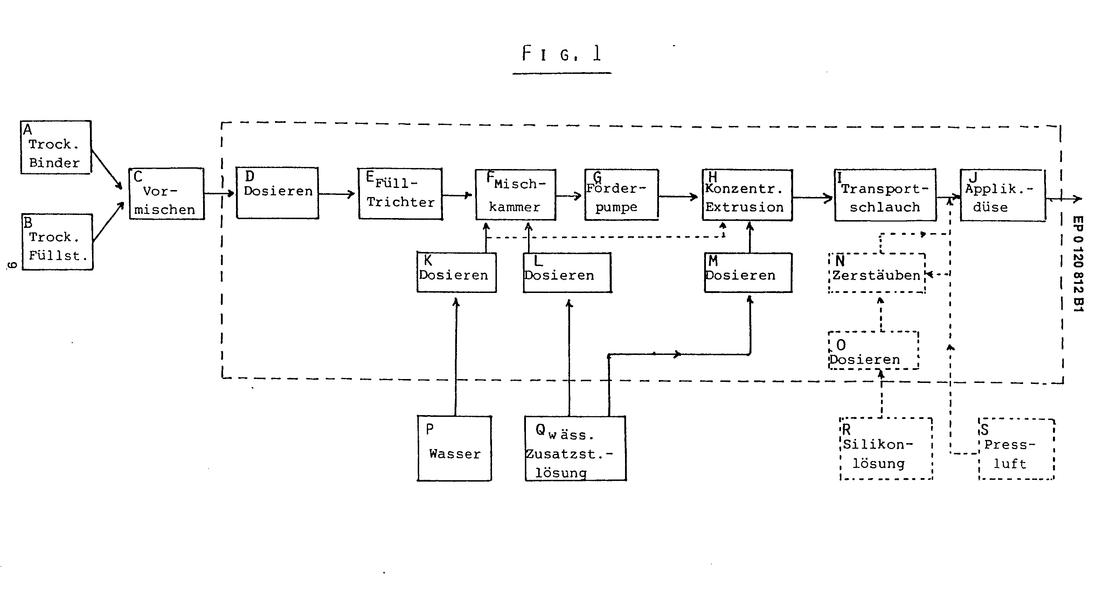

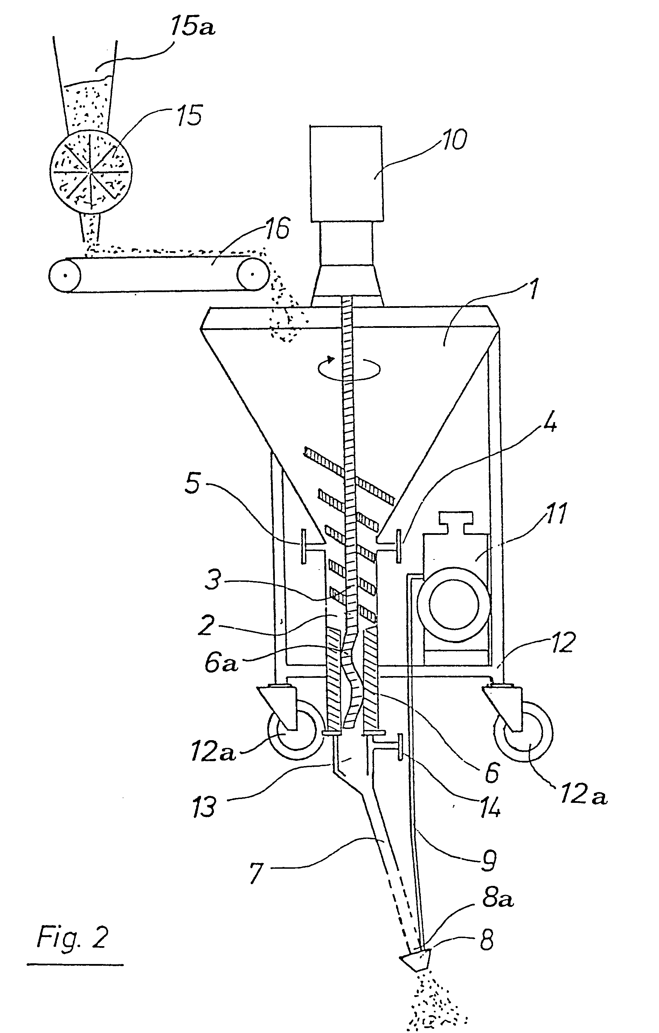

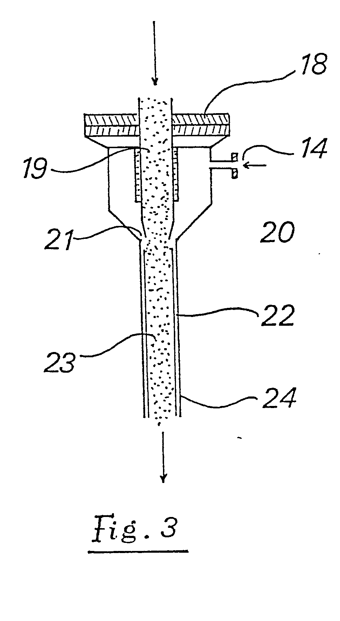

Im Fliessdiagramm Fig. 1 ist das erfindungsgemässe Verfahren in seinem Ablauf schematisch dargestellt. Jeder umrahmte Kasten bedeutet einen Verfahrensschritt, bzw. den zu seiner Ausführung benützten Teil der Vorrichtung. Kästen mit ausgezogener Umrahmung entsprechen der im Hauptanspruch beschriebenen, solche mit punktierter Umrahmung wahlweise verwendeten Ausführungsformen. Der gestrichelte Rahmen umfasst die Verfahrensschritte, die in den in Fig. 2 und 3 näher dargestellten Vorrichtungen durchgeführt werden.

Trockener Binder A und trockener Füllstoff B, die getrennt auf die Baustelle angeliefert und dort gelagert wurden, werden im Verfahrensschritt C gemischt. Mittels der Dosiervorrichtung D wird das trockene Vorgemisch zum Fülltrichter E und von da zur Mischkammer F gefördert. Wässerige Lösung von Zusatzstoffen Q und wahlweise zusätzliches Wasser P werden durch die Dosiervorrichtungen L und K in die Mischkammer F eingeführt. Von dort gelangt das feuchte Vorgemisch in die Förderpumpe G und wird zunächst in in die konzentrische Extrusionsdüse H gepresst. Der zentrale Strang des Teilgemischs wird dort mit einem zylindrischen Flüssigkeitsmantel, bestehend aus den restlichen Anteilen der wässerigen Lösung von Zusatzmitteln, umgeben, welcher durch die Dosiervorrichtung M seitlich in die konzentrische Extrusionsdüse H eingespiesen wird. Durch den Transportschlauch I wird die Baustoffzubereitung nun zur Applikationsdüse J weitergefördert. Wahlweise wird zusätzlich Pressluft S der Applikationsdüse J oder einem unmittelbar davorliegenden Punkt zugeleitet und tritt zusammen mit der Baustoffzubereitung aus der Applikationsdüse aus. Durch die Dosiervorrichtung O und die Zerstäuberdüse N kann ausserdem wahlweise ein aus Silikonlösung bestehendes Aerosol in den Pressluftstrom eingespiesen werden.

In der schematischen Darstellung Fig. 2, welche den Hauptteil der für das erfindungsgemässe Verfahren verwendeten Apparatur zeigt, wird ein trockenes Gemisch von Binder und Füllstoff, welches in einer in der Figur nicht gezeigten separaten Mischapparatur hergestellt wurde, in den Trichter (15a) der Dosiervorrichtung (15) eingebracht und fällt von da auf das Förderband (16), von welchem es zum Fülltrichter (1) des Nassmischers transportiert wird. Durch die Rührvorrichtung (3) wird das Gemisch weiter zur Nass-Mischkammer (2) gefördert. Durch den Einlass (4) wird wässerige Lösung von Zusatzstoffen, und durch den Einlass (5) wahlweise zusätzliches Wasser in die Mischkammer geleitet, wofür gesonderte, in der Figur nicht dargestellte Dosiervorrichtungen vorgesehen sind. Aus der Mischkammer (2) gelangt die feuchte Mischung, welche nur einen Teil der gesamthaft verwendeten Zusatzstoffe enthält, zur Förderpumpe (6), welche, wie in der Figur angedeutet, eine Schraubenpumpe oder auch eine andere, zum Transport viskoser Massen geeignete Pumpe sein kann. Die Förderpumpe presst die feuchte Teilmischung in den zentralen Einlass der konzentrischen Extrusionsdüse (13). In dieser Düse wird der zentrale Strang vorgemischter Baustoffzubereitung von einer konzentrischen Flüssigkeitsschicht aus dem Rest wässeriger Lösung von Zusatzstoffen umhüllt und dann weiter in den Transportschlauch (7) gefördert. Nicht in der Figur gezeigt ist die Vorrichtung zur Dosierung der Silikonlösung und Einführung des Aerosols in die Pressluftzuleitung (9). Die Apparatur ist eingebaut in den Rahmen (12), der seinerseits auf den Rollen (12a) ruht. Der Rührer (3) und die Achse (6a) der Förderpumpe sind vorzugsweise gefluchtet, so dass sie durch den Motor (10), welcher oberhalb des Einfülltrichters (1) angeordnet ist, gemeinsam angetrieben werden können.

Wie schon erwähnt, kann das erfindungsgemässe Verfahren entweder portionenweise oder kontinuierlich durchgeführt werden. Bei portionenweisem Betrieb wird durch die Vorrichtung (15), sowie durch die Einlässe (4) und (5) je eine bestimmte, dem Volumen der Mischkammer (2) angemessene Menge trockener und flüssiger Bestandteile zugeführt und während einer festgesetzten Zeit durch eine in der Figur nicht gezeigte Vorrichtung zurückgehalten und danach für die Weiterförderung freigegeben. Bei kontinuierlichem Betrieb werden alle Bestandteile des Gemisches durch entsprechende kontinuierlich arbeitende Dosiervorrichtungen eingespeist, und die fertige Zubereitung wird kontinuierlich durch die Düse (8) ausgetragen. Der zulässige Durchsatz der Vorrichtung ist in diesem Fall durch das Volumen der Mischkammer und die vorgeschriebene Mischzeit bestimmt.

Figur 3 zeigt in detaillierter Darstellung schematisch den Aufbau der konzentrischen Extrusionsdüse (13). Die Düse ist durch den Flansch (18) mit dem Auslass der Förderpumpe (6) verbunden. Aus der letzteren wird die nasse Teilzubereitung in den zentralen Einlass (19) der Düse gepresst. Wässerige Lösung von Zusatzstoffen wird durch den seitlichen Einlass (14) in die ringförmige Kammer (20) geleitet, welche das innere Rohr (19) umgibt. Beim Punkt (21) werden die beiden Ströme zusammengeführt, wobei die wässerige Lösung den Kern (23) der Zubereitung in Form eines zylindrischen Mantels (22) umgibt. Die in den seitlichen Einlass (14) der konzentrischen Extrusionsdüse (13) eingeführte wässerige Lösung von Zusatzstoffen kann die gleiche Zusammensetzung aufweisen, wie die in den Einlass (4) der Mischkammer (2) eingeführte Lösung. Es ist aber auch möglich, aus der Gesamtheit der Zusatzstoffe einzelne Bestandteile ungleichmässig auf die an den beiden Einlässen (4) bzw. (14) zugeführten Lösungen zu verteilen. Vorzugsweise wird man die hochmolekularen Anteile der Zusatzstoffe wegen ihrer schmierenden Wirkung für die Bildung des Flüssigkeitsmantels verwenden.

Das folgende Beispiel soll dazu dienen, das erfindungsgemässe Verfahren näher zu erläutern. Sein Anwendungsspektrum ist sehr breit: Je nach Art der angestrebten Baustoffzubereitung und der verwendeten Grundstoffe liegt das Verhältnis von Binder und Füllstoffen im gebrauchsfertigen Gemisch zwischen 5:95 und 99:1 Gewichtsteilen; das Gewichts-verhältnis zwischen der Summe der Feststoffe und dem Wasser bewegt sich zwischen 90:10 und 67:33. Auch der Anteil der Zusatzstoffe ist variabel und wird zwischen 0.01 und 3 Gewichtsprozenten betragen. Das Beispiel illustriert deshalb nur einen kleinen Teil des Anwendungsbereichs und soll in keiner Weise einschränkend verstanden werden.

Beispiel:
In einer Vorrichtung entsprechend der Figur 2 wird eine Mischung von
70 Gewichtsteilen Sand,
20 Gewichtsteilen Portlandzement und
10 Gewichtsteilen gebranntem Kalk,
die zuvor in einer separaten Vorrichtung aus den Bestandteilen zubereitet wurde, durch die Dosiervorrichtung (15) und das Förderband (16) kontinuierlich dem Fülltrichter (1) zugeführt, während gleichzeitig, auf 100 Teile der pro Zeiteinheit eindosierten obigen Mischung,
14 Gewichtsteile einer wässerigen Lösung, enthaltend
1 Gew.% Cellulose-Hydroxypropyl-Methyläther *)
und 0.1 Gew.% zu 30% hydrolysiertes Polyacrylamid **)
durch den Einlass (4) und
2 Gewichtsteile Wasser durch den Einlass (5) in die Mischkammer (2) eindosiert werden.

Weitere 6 Gewichtsteile der gleichen wässerigen Lösung, enthaltend 1 Gewichtsprozent Cellulose-Hydroxypropyl-Methyläther und 0.1 Gewichtsprozent teilweise hydrolysiertes Polyacrylamid, beide bezogen auf 100 Gewichtsteile der Trockenmischung pro Zeiteinheit, werden gleichzeitig kontinuierlich in den seitlichen Einlass (14) der konzentrischen Extrusionsdüse eindosiert. In den anschliessenden Transportschlauch (7) mit einem Innendurchmesser von 35 mm gelangt aus dem Austrittsstutzen der Düse (13) ein Kern (23) von nasser Spritzputzmasse, der von einem ca. 0.65 mm dicken zylindrischen Mantel (22) aus wässeriger Zusatzstofflösung konzentrisch umhüllt ist. Die Dicke des Flüssigkeitsmantels vermindert sich beim Transport durch den Schlauch; in der Turbulenzzone der Applikationsdüse wird dann die restliche Mantelflüssigkeit vollends mit der Kernmasse vermischt. Die aufzutragende Baustoffmasse besitzt danach die Zusammensetzung, welche der Summe aller zugesetzten Bestandteile entspricht.

**Patentansprüche**

1. Verfahren für die Herstellung und unmittelbare Anwendung von gebrauchsfertigen Baustoffzu-

---

* Viskosität einer 2%igen wässerigen Lösung 75 000 cP bei 20°C
** Viskosität einer 0.1%igen wässerigen Lösung 200 cP bei 20°C bereitungen, die neben Wasser als Hauptbestandteile je mindestens einen Binder, einen Füllstoff und einen Zusatzstoff enthalten, dadurch gekennzeichnet, dass man

a) zuerst ein trockenes Gemisch von Binder und Füllstoff herstellt,

b) dieses Gemenge mit einem Teil des für die fertige Zubereitung erforderlichen Wassers und nur einem Teil der Zusatzstoffe in Form einer wässerigen Lösung vermischt,

c) das so gewonnene Nassgemisch in den zentralen Teil einer konzentrischen Extrusionsdüse einspeist, und das restliche Wasser, in welchem die restlichen Zusatzstoffe gelöst sind, durch den seitlichen Einlass der Extrusionsdüse zugibt, wobei diese wässerige Lösung in der Extrusionsdüse einen den Kern der Zubereitung umgebenden Flüssigkeitsmantel bildet, und

d) den aus Kern und Flüssigkeitsmantel bestehenden Strang der Baustoffzubereitung durch einen Schlauch der Applikationsdüse zuführt, durch welche sie an Ort und Stelle aufgetragen wird.

2. Verfahren gemäss Anspruch 1, dadurch gekennzeichnet, dass die örtliche Anwendung der gebrauchsfertigen Baustoffzubereitung durch Pressluft unterstützt wird.

3. Verfahren gemäss Anspruch 2, dadurch gekennzeichnet, dass mit dem Pressluftstrom ein feinverteiltes Aerosol aus der Lösung eines hydrophobierenden Silikons in die Baustoffzubereitung eingeführt wird.

4. Verfahren gemäss einem der Ansprüche 1 bis 3, dadurch gekennzeichnet, dass die gebrauchsfertige Baustoffzubereitung ein Mörtel, eine Putz-, Überzugs- oder Ausgleichsmasse für Boden-, Wand- oder Deckenelemente, eine Füllmasse für Fugen und Hohlräume oder ein Fliesenkleber ist.

5. Verfahren gemäss Anspruch 4 dadurch gekennzeichnet, dass man als Binder mindestens eine Substanz aus der Gruppe umfassend Zement, Gips, Magnesit und gebrannten Kalk verwendet.

6. Verfahren gemäss den Ansprüchen 4 und 5, dadurch gekennzeichnet, dass man als Füllstoff mindestens eine Substanz aus der Gruppe umfassend Sand, Steinmehl, gebrochenen Marmor, oder Dolomit, gemahlene Schlacke, Flugasche, Ton, Kaolin, Blähton und Polystyrolschaum verwendet.

7. Verfahren gemäss den Ansprüchen 4 bis 6, dadurch gekennzeichnet, dass man als Zusatzstoff mindestens eine Substanz aus der Gruppe umfassend tierische und pflanzliche Leime, Alginate, wasserlösliche Stärkeäther, Celluloseäther, Carboxymethylcellulose, Polyvinylalkohol, Polyacrylamid, Seife, Harzseife, Ligninsulfonat, Fettsäuresulfonat, Alkylarylsulfonat, Polyäthylenoxid-Addukte, Weinsäure, Maleinsäure und Zitronensäure verwendet.

8. Verfahren gemäss den Ansprüchen 1 bis 7, dadurch gekennzeichnet, dass in der fertigen Zubereitung das Gewichtsverhältnis von Binder und Füllstoff zwischen 5:95 und 99:1 und das Gewichtsverhältnis der Summe der Feststoffe zum Wasser zwischen 90:10 und 67:33 liegt.

9. Verfahren gemäss den Ansprüchen 1 bis 8, dadurch gekennzeichnet, dass in der fertigen Zubereitung der Anteil der Zusatzstoffe zwischen 0.01 und 3 Gewichtsprozenten liegt.

10. Verfahren gemäss den Ansprüchen 1 bis 9, dadurch gekennzeichnet, dass im Verfahrensschritt c) der Anteil der in der konzentrischen Extrusionsdüse seitlich zugeführten Menge wässeriger Lösung so gewählt wird, dass die Dicke des zylindrischen Flüssigkeitsmantels zwischen 0.5 und 2 Millimetern beträgt.

11. Verfahren gemäss den Ansprüchen 1 bis 10, dadurch gekennzeichnet, dass die in den Verfahrensschritten b) und c) des Anspruchs 1 verwendeten wässerigen Lösungen von Zusatzstoffen die gleiche Zusammensetzung aufweisen.

12. Verfahren gemäss den Ansprüchen 1 bis 10, dadurch gekennzeichnet, dass die in den Verfahrenschritten b) und c) des Anspruchs 1 verwendeten wässerigen Lösungen von Zusatzstoffen eine unterschiedliche Zusammensetzung aufweisen.

13. Vorrichtung zur Ausübung des Verfahrens gemäss einem der Ansprüche 1, 2 und 4 bis 12, mit einer Dosiervorrichtung (15) für das trockene Vorgemisch von Binder und Füllstoff, einem Fülltrichter (1), einer Mischkammer (2) mit Rührvorrichtung (3) sowie zwei Flüssigkeits-Einlässen (4) und (5), einer an die Mischkammer angeschlossenen Förderpumpe (6), einer konzentrischen Extrusionsdüse mit zentralem (19) und seitlichem (14) Einlass, sowie einem direkt in einen Transportschlauch (7) mündenden Auslass (24), wobei der Transportschlauch an seinem freien Ende eine Applikationsdüse trägt, durch welche das in der Vorrichtung erzeugte Baustoffgemisch an Ort und Stelle aufgetragen werden kann.

14. Vorrichtung gemäss Anspruch 13, dadurch gekennzeichnet, dass in die Applikationsdüse oder einen nahe davor liegenden Punkt des Transportschlauchs eine Zufuhrleitung für Pressluft einmündet.

15. Vorrichtung gemäss Anspruch 14, dadurch gekennzeichnet, dass sie zusätzlich eine durch Pressluft betriebene Zerstäubervorrichtung zur Erzeugung eines Aerosols aus einer Flüssigkeit umfasst, deren Ausgang unmittelbar in die Pressluftleitung einmündet.

**Claims**

1. A process for the preparation and immediate application of a ready-to-use blend of structural materials, the components of which blend comprise water and at least one binder, at least one filler and at least one additive, said process comprising the steps of

a) preparing a dry premixed blend by mixing the total of binders and fillers to be present in the finished preparation,

b) adding to said premixed blend and mixing therewith an aqueous solution containing a part of the water and only a part of the additives to be used in the finished preparation,

c) feeding the resulting mixture into the central orifice of a concentric extrusion nozzle and feeding the remaining water in which the rest of the additives is dissolved into the lateral orifice of said concentric extrusion nozzle, whereby this aqueous solution is forming a cylindrical liquid mantle surrounding the central core of the preparation,

d) transporting the blend thus prepared and consisting of a core surrounded by a cylindric liquid mantle through a tube to an application nozzle, by which it is applied in situ.

2. The process according to claim 1, characterized in that the application in situ of the blend of structural material is supported by pressurized air.

3. The process according to claim 2, characterized in that a finely dispersed aerosol of a solution of water-repellent silicone is supplied into the blend of structural material by the stream of pressurized air.

4. The process according to one of the claims 1 to 3 characterized in that the ready-to-use blend of structural material is a mortar, a plaster, a mass for covering or smoothing surfaces of floors, walls or ceilings, a mass for filling gaps or a tile adhesive.

5. The process according to claim 4, characterized in that the binder is at least one substance selected from the group consisting of cement, gypsum, magnesite and quick lime.

6. The process according to claims 4 and 5, characterized in that the filler is at least one substance selected from the group consisting of sand, powdered rock, crushed marble or dolomite, ground slag, fly ash, clay, china clay, expanded baked clay and foamed polystyrene.

7. The process according to claims 4 to 6, characterized in that the additive is at least one substance selected from the group consisting of animal glue, vegetal glue, alkali metal alginate, water soluble starch ether, cellulose, ether, carboxymethyl cellulose, polyvinyl alcohol, polyacryl amide, fatty acid soap, alkali metal resinate, lignin sulfonate, fatty acid sulfonate, alkyl aryl sulfonate, polyethyleneoxide adduct, tartaric acid, maleic acid and citric acid.

8. The process according to claims 1 to 7, characterized in that the proportion by weight of the components is so chosen, that in the finished blend the ratio by weight of filler to binder is between 5 to 95 and 99 to 1 and the ratio by weight of the sum of solids to water is between 90 to 10 and 67 to 33.

9. The process according to claims 1 to 8, characterized in that the fraction of the additives in the finished blend is between 0.01 and 3 percents by weight.

10. The process according to claims 1 to 9, characterized in that in step c) of claim 1 the fraction of aqueous solution fed into the lateral orifice of the concentric extrusion nozzle is chosen so as to make the thickness of the cylindrical liquid mantle between 0.5 and 2 millimeters.

11. The process according to claims 1 to 10, characterized in that the aqueous solutions used in the steps b) and c) of claim 1 have the same composition.

12. The process according to claims 1 to 10, characterized in that the aqueous solutions used in the steps b) and c) of claim 1 are of a different composition.

13. Apparatus for carrying out the process according to claims 1, 2 and 4 to 12 comprising a metering device (15) for the dry premix of binder and filler, a filling hopper (1), a mixing chamber (2) with a stirring device (3) and two inlets for liquids (4) and (5), a conveying pump (6) connected to the mixing chamber, a concentric extrusion nozzle with a central (19) and a lateral (14) inlet and an outlet orifice (24) directly connected to a transport hose (7), which latter carries at its free end an application nozzle through which the structural blend prepared in the apparatus is applied in situ.

14. Apparatus according to claim 13, characterized in that a conduit for pressurized air is connected to the application nozzle or to a point of the transport hose situated near the application nozzle.

15. Apparatus according to claim 14, characterized in that it comprises an additional atomizing nozzle for the transformation of a liquid into an aerosol, the outlet of said atomizing nozzle being directly connected to the conduit of pressurized air.

**Revendications**

1. Procédé pour la production et l'application immédiate de préparations de matériau de construction prêtes à l'emploi qui contiennent comme composants essentiels, outre l'eau, au moins un liant, un matériau de charge et un adjuvant, caractérisé en ce que

a) on prépare premièrement un mélange sec du liant avec le matériau de charge,

b) on mêle ce mélange avec une partie de l'eau nécessaire pour la préparation complète et seulement une partie des adjuvants,

c) on alimente de ce mélange humide la partie centrale d'une filière d'extrusion concentrique, et on introduit par un orifice latéral de ladite filière le reste de l'eau, dans lequel sont dissolus les adjuvants restants, cette solution aqueuse entourant le noyau central de la préparation en forme d'une enveloppe cylindrique, et

d) on amène le faisceau formé par la préparation de matériau de construction, consistant d'un noyau entouré d'une enveloppe liquide, vers une filière d'application moyennant laquelle la préparation est appliquée sur place.

2. Procédé selon la revendication 1, caractérisé en ce que l'application de la préparation de matériau de construction est assistée par de l'air comprimé.

3. Procédé selon la revendication 2 caractérisé en ce qu'un aérosol finement dispersé de silicone imperméabilisante est introduit, avec le courant d'air comprimé, dans la préparation de matériau de construction.

4. Procédé selon une des revendications 1 à 3 caractérisé en ce que la préparation de matériau de construction est un mortier, un mortier pour enduit, une préparation de revêtement ou d'aplanissement pour des éléments de sol, de paroi ou de plafond ou une matière de remplissage pour joints.

5. Procédé selon la revendication 4, caractérisé en ce qu'on emploie comme liant au moins une substance du groupe comprenant le ciment, le plâtre, la magnésite et la chaux vive.

6. Procédé selon les revendications 4 et 5, caractérisé en ce qu'on emploie comme matériau de charge au moins une substance du groupe comprenant le sable, la poussière de pierre, le marbre ou la dolomite broyés, la scorie broyée, la cendre volante, l'argile, le kaolin, l'argile expansée et la mousse de polystyrène.

7. Procédé selon les revendications 4 à 6, caractérisé en ce qu'on emploie comme adjuvant au moins une substance du groupe comprenant les colles d'origine végétale ou animale, les alginates, les éthers d'amidon solubles en l'eau, les éthers de cellulose, la cellulose carboxyméthylique, l'alcool polyvinylique, l'amide polyacrylique, le savon, les résinates, la sulfonate de lignine, les sulfonates d'acides gras, les sulfonates d'alkyle-aryle, les produits d'addition du polyéthylène-oxyde et les acides tartrique, maléinique et citrique.

8. Procédé selon les revendications 1 à 7, caractérisé en ce que dans la préparation prête à l'usage la proportion entre le liant et le matériau de charge est entre 5:95 et 99:1, et la proportion entre la somme des matières solides et l'eau est entre 90:10 et 67:33.

9. Procédé selon les revendications 1 à 8, caractérisé en ce que dans la préparation prête à l'usage la concentration par poids des adjuvants est entre 0.01 et 3 pourcent.

10. Procédé selon les revendications 1 à 9, caractérisé en ce que dans la section c) du procédé la fraction du liquide amené vers l'orifice latéral de la filière d'extrusion concentrique est choisie de sorte qu'il en résulte une épaisseur de l'enveloppe cylindrique de liquide entre 0.5 et 2 millimètres.

11. Procédé selon les revendications 1 à 10, caractérisé en ce que les solutions aqueuses employées dans les sections de procédé b) et c) de la revendication 1 sont de composition égale.

12. Procédé selon les revendications 1 à 10, caractérisé en ce que les solutions aqueuses employées dans les sections de procédé b et c) de la revendication 1 sont de composition différente.

13. Dispositif pour la mise en œuvre du procédé selon une des revendications 1, 2 et 4 à 12 avec un doseur (15) pour le mélange sec du liant et le matériau de charge, une trémie d'alimentation (1), une chambre de mélange (2) avec un agitateur (3) et deux orifices d'admission (4) et (5) pour les liquides, une pompe de circulation (6) raccordée à la chambre de mélange, une filière concentrique avec orifices d'admission central (19) et latéral (14) et un orifice de sortie (24) débouchant directement dans un tuyau de transport (7), ce tuyau portant à son extrémité libre une filière d'application moyennant laquelle la préparation produite dans le dispositif peut être appliquée sur place.

14. Dispositif selon la revendication 13, caractérisé en ce qu'une conduite d'admission d'air comprimé embouche dans la filière d'application ou dans une position du tuyau de transport proche à la filière.

15. Dispositif selon la revendication 14, caractérisé en ce qu'il comprend en outre un atomiseur pour la transformation d'un liquide en aérosol actionné par de l'air comprimé, la sortie dudit atomiseur débouchant immédiatement dans la conduite d'air comprimé.

# FIG. 1

| | |
|---|---|
| **A** Trock. Binder | |
| **B** Trock. Füllst. | |

**C** Vor-mischen → **D** Dosieren → **E** Füll-Trichter → **F** Misch-kammer → **G** Förder-pumpe → **H** Konzentr. Extrusion → **I** Transport-schlauch → **J** Applik.-düse →

**K** Dosieren

**L** Dosieren

**M** Dosieren

**N** Zerstäuben

**O** Dosieren

**P** Wasser

**Q** wäss. Zusatzst.-lösung

**R** Silikon-lösung

**S** Press-luft

EP 0 120 812 B1

*Fig. 2*

_Fig. 3_